(19) Europäisches Patentamt
European Patent Office
Office européen des brevets

(11) **EP 4 517 850 A1**

(12) **EUROPEAN PATENT APPLICATION**
published in accordance with Art. 153(4) EPC

(43) Date of publication:
05.03.2025 Bulletin 2025/10

(21) Application number: 22951488.0

(22) Date of filing: 20.07.2022

(51) International Patent Classification (IPC):
*H01M 4/04* (2006.01)     *B29C 45/60* (2006.01)
*B29C 48/395* (2019.01)

(52) Cooperative Patent Classification (CPC):
B29C 48/525; B29C 45/60; B29C 48/022;
B29C 48/08; B29C 48/305; B29C 48/35;
B29C 48/395; B29C 48/397; B29C 48/40;
B29C 48/402; B29C 48/53; B29C 48/625;
B29C 48/92; H01M 4/04; B29L 2031/3468;   (Cont.)

(86) International application number:
PCT/CN2022/106724

(87) International publication number:
WO 2024/016210 (25.01.2024 Gazette 2024/04)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Contemporary Amperex Technology
Co., Limited
Ningde, Fujian 352100 (CN)**

(72) Inventors:
• **LU, Lei**
  **Ningde, Fujian 352100 (CN)**

• **YU, Linzhen**
  **Ningde, Fujian 352100 (CN)**
• **WANG, Zheng**
  **Ningde, Fujian 352100 (CN)**
• **LI, Shisong**
  **Ningde, Fujian 352100 (CN)**
• **ZHANG, Shengwu**
  **Ningde, Fujian 352100 (CN)**
• **LI, Keqiang**
  **Ningde, Fujian 352100 (CN)**
• **DENG, Kaiming**
  **Ningde, Fujian 352100 (CN)**

(74) Representative: **Gong, Jinping
CocreateIP
Neumarkterstr. 21
81673 München (DE)**

(54) **SEPARATOR MANUFACTURING APPARATUS AND ELECTRODE SHEET MANUFACTURING DEVICE**

(57)     The present application provides a film preparation apparatus, including a single-screw machine and an extrusion die, wherein the single-screw machine is configured for conveying and extruding an active material mixture, the extrusion die is connected with a discharge end of the single-screw machine and configured for extruding out an active material film, wherein a screw of the single-screw machine includes a compression section, an axial length of the compression section is **L1,** an axial length of the screw is **L,** and 0.45≤L1/L≤0.65. The technical solutions of the present application can effectively ensure the structural compactness of the active material mixture, and simultaneously effectively ensure the continuous uniformity of the feeding of the single-screw machine to the extrusion die, thereby effectively ensuring the structural uniformity and structural continuity of the extruded film, so that the production quality of the battery may be effectively improved.

FIG. 2

**(Cont. next page)**

(52) Cooperative Patent Classification (CPC): (Cont.)
    H01M 4/0411; Y02E 60/10

**Description**

**Technical Field**

The present application relates to a field of battery manufacturing technology, and in particular, to a film preparation apparatus and an electrode plate manufacturing device.

**Background Art**

Energy conservation and emission reduction are keys to the sustainable development of the automobile industry, and electric vehicles have become an important part of the sustainable development of the automobile industry, due to their advantages in energy conservation and environmental protection. For electric vehicles, battery technology is an important factor in its development.

In the battery production, how to improve the production quality of batteries is an urgent problem to be solved.

**Summary**

The present disclosure provides a film preparation apparatus and an electrode plate manufacturing device. The film preparation apparatus can effectively improve uniformity and continuity of an extruded film, thereby effectively improving the production quality of the battery.

In a first aspect, the present application provides a film preparation apparatus, including a single-screw machine and an extrusion die, wherein the single-screw machine is configured for conveying and extruding an active material mixture, the extrusion die is connected with a discharge end of the single-screw machine and configured for extruding out an active material film, wherein a screw of the single-screw machine includes a compression section, an axial length of the compression section is L1, an axial length of the screw is L, and $0.45 \leq L1/L \leq 0.65$.

In the technical solution of the present application, the film preparation apparatus continuously feeds the extrusion die through the single-screw machine, provides extrusion power for the active material mixture, and use the extrusion die to shape the active material mixture, so that the active material mixture can be extruded and formed into a three-dimensional active material film. In the above, the compression section of the screw in the single-screw machine plays a role in building pressure on the active material mixture, making the active material mixture more compact and have better interface fusion, effectively improving the elasticity, extensibility and plasticity of the active material mixture, and thereby reducing the risk of non-uniform material distribution, poor structural strength, and easy breakage of the extruded film.

Moreover, the active material mixture is relatively hard and has an easily-loosen structure. The pressure building of the screw on the active material mixture is particularly important. If the length of the compression section is too short, pressure building cannot be sufficiently performed on the active material mixture, resulting in that the compactness and structural plasticity of the active material mixture cannot be effectively improved. If the length of the compression section is too long, it may result in that the length of the material discharge section of the screw is too short, thus the uniformity of the conveying to the extrusion die cannot be guaranteed, which in turn affects the structural uniformity of the extruded film. In the technical solution of the present application, the length of the compression section of the screw is designed to be 45% to 65% of the overall length of the screw, which can effectively ensure the structural compactness of the active material mixture, and simultaneously effectively ensure the continuous uniformity of the feeding of the single-screw machine to the extrusion die, thereby effectively ensuring the structural uniformity and structural continuity of the extruded film, so that the production quality of the battery may be effectively improved.

According to some embodiments of the present application, $0.54 \leq L1/L \leq 0.58$.

In the technical solution of the present application, the length of the compression section of the screw is designed to be 54% to 58% of the overall length of the screw, which can effectively ensure the structural compactness of the active material mixture, and simultaneously effectively ensure the continuous uniformity of the feeding of the single-screw machine to the extrusion die.

According to some embodiments of the present application, the compression ratio of the screw is ε, $2 \leq \varepsilon \leq 2.1$, and preferably, $2.05 \leq \varepsilon \leq 2.08$.

In the above technical solution, the compression ratio of the screw is related to the change in the thread groove depth of the compression section of the screw. The larger the compression ratio of the screw is, the more sufficient the pressure building on the active material mixture is, and the stronger the structural compactness and composition uniformity of the active material mixture is, which can effectively reduce the risk of non-uniform structure, low structural strength and easy breakage of the extruded film. However, if the compression ratio of the screw is too large, the strength of the screw may be reduced, which may easily result in that the screw is sheared off under a relatively large torque, thus limiting the rotational speed and processing capacity of the screw. The compression ratio of the screw of the present application is designed between 2 and 2.1, which can effectively improve the pressure building effect of the single-screw machine on the active material mixture, and simultaneously ensure the processing capacity and extrusion capacity of the single-screw machine effectively.

According to some embodiments of the present application, $450mm \leq L1 \leq 500mm$.

In the above technical solution, the length of the compression section is 450 mm to 500 mm, which can give full play to the pressure building effect on the active material mixture, ensure the structural compactness and composition uniformity of the active material mixture, and simultaneously avoid the problem that the screw is too long to affect its own structural strength and cause its own too large weight, thereby effectively reducing the risk of difficulty in manufacturing and installing the single-screw machine.

According to some embodiments of the present application, the screw further includes a conveying section and a homogenization section, wherein the conveying section, the compression section and the homogenization section are arranged in sequence in the conveying direction of the screw, the thread groove depth of the conveying section is greater than the thread groove depth of the homogenization section, and the thread groove depth of the compression section gradually decreases from the conveying section to the homogenization section.

In the above technical solution, the screw includes a conveying section, a compression section and a homogenization section. The conveying section is used to convey the active material mixture from the feeding end of the single-screw machine to the compression section. The thread groove depth of the conveying section is greater than the thread groove depth of the homogenization section, effectively ensuring the material processing capacity and processing efficiency of the conveying section. The thread groove depth of the compression section gradually decreases, the volume of the thread groove thereof gradually decreases, and the processing capacity of the active material mixture gradually decreases, so that pressure is gradually built up on the active material mixture, increasing the structural compactness of the active material mixture. The thread groove depth of the homogenization section is the smallest, to convey the compacted active material mixture to the extrusion die at a uniform speed and under a uniform amount.

According to some embodiments of the present application, the thread groove depth of the compression section is H2, 3mm≤H2≤10mm, and preferably, 4mm≤H2≤ 9.8mm.

In the above technical solution, the thread groove depth of the compression section gradually decreases within the range of greater than or equal to 3 mm and less than or equal to 10 mm in the conveying direction of the screw. Such design avoids, while ensuring the compression ratio of the screw, the thread groove depth of the conveying section from being too large to affect the structural strength of the screw, and prevents the thread groove depth of the homogenization section from being too small to affect the conveying efficiency of the active material mixture.

According to some embodiments of the present application, the axial length of the conveying section is L2, 0.12≤L2/L≤0.4, and preferably, 0.15≤L2/L≤0.35.

In the above technical solution, the length of the conveying section accounts for 12% to 40% of the total length of the screw, which can effectively ensure the conveying capacity and conveying efficiency of the conveying section for the active material mixture.

According to some embodiments of the present application, the axial length of the conveying section is L2, 200mm≤L2≤240mm, and preferably, 215mm≤L2≤222mm.

In the above technical solution, the axial length of the conveying section is 200mm to 240mm, which can meet the requirements for the conveying efficiency of the active material mixture and reduce the risk of accumulation and blockage of the active material mixture at the feeding end of the single-screw machine.

According to some embodiments of the present application, the thread groove depth of the conveying section is H1, and the outer diameter of the screw is D, which satisfy: H1 > 0.1D, and preferably,H1 > 0.2D.

In the above technical solution, the thread groove depth of the conveying section is greater than 10% of the outer diameter of the screw, which can effectively ensure the volume of the thread groove of the conveying section, thereby effectively ensuring the conveying efficiency of the conveying section for the active material mixture.

According to some embodiments of the present application, the thread groove depth of the conveying section is H1, 9mm≤H1≤10mm, and preferably, 9.5mm≤H1≤9.8mm.

In the above technical solution, the thread groove depth of the conveying section is 9mm to 10mm, effectively ensuring the conveying efficiency of the conveying section.

According to some embodiments of the present application, the axial length of the homogenization section is L3, 0.10≤L3/L≤0.30, and preferably, 0.15≤L3/L≤0.25.

In the above technical solution, the axial length of the homogenization section accounts for 10% to 30% of the length of the screw, which can effectively ensure the uniformity and continuity of the conveying of the compacted active material mixture in the homogenization section.

According to some embodiments of the present application, the axial length of the homogenization section is L3, 150mm≤L.3≤200mm, and preferably, 175mm≤L3≤185mm.

In the above technical solution, the axial length of the homogenization section is 150 mm to 200 mm, which can satisfy the production requirements for continuous, quantitative and uniform extrusion of the active material, and effectively ensure the extrusion effect of the single-screw machine.

According to some embodiments of the present application, the thread groove depth of the homogenization section is H3, the outer diameter of the screw is D, 0.02D≤H3≤0.15D, and preferably, 0.08D≤H3≤0.1D.

In the above technical solution, the thread groove depth of the homogenization section accounts for 2% to 15% of the outer diameter of the screw, which can avoid excessive changes in the compactness of the active material mixture due to too large volume of the thread groove of the homogenization section, while effectively ensuring the conveying efficiency of the homogenization section, and avoid affecting the extrusion uniformity and continuity of the film.

According to some embodiments of the present application, the thread groove depth of the homogenization section is H3, 3mm≤H3≤5mm, and preferably, 3.8mm≤H3≤4.2mm.

In the above technical solution, the thread groove depth of the homogenization section is 3mm to 5mm, effectively ensuring the conveying effect of the homogenization section for the active material mixture.

According to some embodiments of the present application, the outer diameter of the screw is D, satisfying: 15≤L/D≤40, and preferably, 18≤L/D≤25.

In the above technical solution, the length-to-diameter ratio of the screw is 15 to 40. If the length-to-diameter ratio of the screw is less than 15, the extrusion capacity and pressure building capacity of the single-screw machine may be affected, thereby affecting the quality of extruding the active material mixture into a film; while if the length-to-diameter ratio of the screw is greater than 40, the structural strength of the screw may be affected, limiting the rotational speed and processing capacity of the screw, and increasing the difficulty in manufacturing and installation due to the too long screw. The length-to-diameter ratio of the screw is set between 15 and 40, which may effectively ensure the production quality of extruding the active material mixture into the film, and simultaneously reduce difficulty in manufacturing, installing, and driving of the single-screw machine, and effectively save material cost.

According to some embodiments of the present application, the outer diameter of the screw is D, 40mm≤D≤48mm, and preferably, 44mm≤D≤46mm.

In the above technical solution, the outer diameter of the screw is set to 40mm to 48mm, which may reduce the material cost of the single-screw machine while satisfying the production quality of extruding the active material mixture into the film.

According to some embodiments of the present application, the film preparation apparatus further includes: a conical double-forced feeding machine, which communicates with the feeding end of the single-screw machine and is used to continuously and stably feed the single-screw machine. The conical screw of the conical double-forced feeding machine has a taper C, 10°≤C≤30°, and preferably, 10°≤C≤20°.

In the above technical solution, the feeding end of the single-screw machine is connected with a conical double-forced feeding machine, and the conical double-forced feeding machine can uniformly, continuously and forcefully feed the lumpy active material mixture in a rib net structure to the single-screw machine, thereby effectively ensuring the conveying continuity of the active material mixture by the single-screw machine. If the taper of the conical screw is too small, the feeding speed of the conical screw is too slow and the forced feeding of the lumpy material cannot be realized, so that the uniform and continuous feeding of the active material mixture cannot be guaranteed; while if the taper of the conical screw is too large, the thread groove depth of the conical screw is large, and the material intake (material feeding amount) is too large, which may easily cause the material to be repeatedly cyclically sheared in the conical double-forced feeding machine, not only easily resulting in excessive shearing of the material, but also causing that most of the material cannot be effectively conveyed to the single screw to be taken away in time, affecting the conveying continuity of single screw. In addition, if the taper is too large, it is easy to cause the material to bridge in the conical double-forced feeding mechanism and not able to enter the screw groove, so the forced feeding function cannot be realized.

The taper of the conical screw of the conical double-forced feeding machine of the present application is set between 10° and 30°, which can effectively ensure the uniformity and continuity of feeding the active material mixture, and reduce the risk of over-shearing the material, thereby improving the production quality of film extrusion.

According to some embodiments of the present application, the screw further includes a conveying section, the conveying section is located upstream of the compression section, the tail end of the conical screw is docked with the conveying section, the thread groove depth at the tail end of the conical screw is H4, and the thread groove depth of the conveying section is H1, where H4>H1.

In the above technical solution, the tail end of the conical screw is docked with the conveying section of the single-screw machine to forcedly feed the active material mixture into the conveying section of the single-screw machine. The thread groove depth at the tail end of the conical screw is greater than the thread groove depth of the conveying section, ensuring that the extrusion amount of the conical double-forced feeding machine is greater than the material intake of the single-screw machine, so as to ensure that the screw has sufficient material intake with no pores, and further improves the continuous uniformity of feeding of the active material mixture.

According to some embodiments of the present application, 0.75H4≤H1≤0.9H4, and preferably,0.77H4≤H1≤0.8H4.

In the above technical solution, if the difference between the thread groove depth of the conveying section and the thread groove depth at the tail end of the conical screw is too large, it may also cause that most of the materials cannot be taken away by the single-screw machine in time, and the material is likely to be blocked and bridge at the feeding end of the single-screw machine, affecting the conveying continuity of the screw; and the material is repeatedly cyclically sheared in the conical double-forced feeding mechanism, which may easily lead to excessive shearing of the material; and the thread groove depth of the conveying section is 75% to 90% of the thread groove depth at the tail end of the conical screw, which can effectively reduce the risk of blocking and over-shearing of the material, thereby ensuring the conveying continuity and the structural stability of the active material mixture, thereby improving the production quality of film extrusion.

In a second aspect, the present application further provides an electrode plate manufacturing device, including: a kneading apparatus for stirring and kneading the active material mixture; the film preparation apparatus as described in any of the above solutions, which is provided downstream of the kneading apparatus, wherein the film preparation apparatus is used to extrude the active material mixture to form an active material film; and a combination apparatus provided downstream of the film preparation apparatus, wherein the combination apparatus is used to combine a substrate and the active material film to form an electrode plate.

In the above technical solution, the kneading apparatus of the electrode plate manufacturing device is used to fully mix and knead, in advance, various compositions for manufacturing the film into a lumpy active material mixture with certain viscosity and plasticity, and then send the lumpy active material mixture to the film preparation apparatus to be extruded to form the active material film, and the combination apparatus combines the active material film with the substrate to obtain the electrode plate. The overall electrode plate manufacturing device is highly integrated, and can effectively improve the production quality and production efficiency of the electrode plate, thereby effectively improving the production quality of the battery.

**Brief Description of Drawings**

In order to more clearly illustrate the technical solutions of the embodiments of the present application, the drawings that are required to be used in the embodiments will be briefly introduced below. Apparently, the following described drawings only show some embodiments of the present application, and those skilled in the art can also obtain other related drawings based on these drawings without paying creative work.

FIG. 1 is a structural front view of a film preparation apparatus provided in some embodiments of the present application;

FIG. 2 is a front view of a screw structure of a single-screw machine provided in some embodiments of the present application;

FIG. 3 is a front view of an extrusion die provided in some embodiments of the present application;

FIG. 4 is a structural top view of a film preparation apparatus provided in some embodiments of the present application;

FIG. 5 is a front view of a conical screw of a conical double-forced feeding machine provided in some embodiments of the present application;

FIG. 6 is a schematic view of an overall structure of an electrode plate manufacturing device provided in some embodiments of the present application; and

FIG. 7 is a schematic view of a simple structure of an electrode plate manufacturing device provided in some embodiments of the present application.

In the drawings, the drawings are not drawn to the actual scale.

Reference signs: 1000-electrode plate manufacturing device; 100-film preparation apparatus; 10-single-screw machine; 11-screw; 111-conveying section; 112-compression section; 113-homogenization section; 20-extrusion die; 21-die body; 22-feeding port; 23-lip; 30-conical double-forced feeding machine; 31-conical screw; 200-combination apparatus; 210-unwinding mechanism; 220-rolling mechanism; 221-pressure roller; 300-kneading apparatus; 400-drying device; 500-active material film; 600-substrate.

**Detailed Description of Embodiments**

In order to make the purposes, technical solutions and advantages of the embodiments of the present application clearer, the technical solutions in the embodiments of the present application will be clearly and completely described below in conjunction with the drawings in the embodiments of the present application. Obviously, the described embodiments are some, but not all of embodiments of the present application. Generally, the components of the embodiments of the present application described and illustrated in the drawings here may be arranged and designed in a variety of different configurations.

Hence, the following detailed description of the embodiments of the present application provided in the drawings is not intended to limit the scope of the claimed application, but merely represents selected embodiments of the present application. Based on the embodiments in the present application, all other embodiments obtained by persons of ordinary skill in the art without paying creative efforts fall within the protection scope of the present application.

Embodiments of the technical solutions of the present application will be described in detail below in conjunction with the drawings. The following embodiments are only used to illustrate the technical solutions of the present application more clearly, and therefore are only examples, rather than limiting the protection scope of the present application.

Unless otherwise defined, all technical and scientific terms used herein have the same meaning as commonly understood by those skilled in the technical field of the present application. The terms used herein are only for the purpose of describing embodiments, and are not intended to limit the present application. Terms "comprising" and "having" and any variations thereof in the specification and claims of the present application and the above description of the drawings are intended to cover a non-exclusive inclusion.

In the description of the embodiments of the present application, technical terms such as "first" and "second" are only used to distinguish different objects, and should not be understood as indicating or implying importance in relativity or implicitly indicating the number, specific sequence, or primary-subordinate relationship of the indicated technical features. In the description of the embodiments of the present application, "plurality" means two or more, unless otherwise specifically defined.

Reference made herein to "embodiment" means that a particular feature, structure, or characteristic described in connection with the embodiment may be included in at least one embodiment of the present application. The phases occurring in various places in the specification do not necessarily all refer to the same embodiment, nor are separate or alternative embodiments mutually exclusive of other embodiments. It is understood explicitly and implicitly by those skilled in the art that the embodiments described herein may be combined with other embodiments.

In the description of the embodiments of the present application, "plurality" means two or more (including two).

In the description of the embodiments of the present application, the orientation or positional relationship indicated by technical terms "center", "longitudinal", "lateral", "length", "width", "thickness", "upper", "lower", "front", "rear", "left", "right", "vertical", "horizontal", "top", "bottom", "inner", "outer", "clockwise", "counterclockwise", "axial", "radial", "circumferential", etc. are based on orientation or positional relationship shown in the drawings, only for the convenience of describing the embodiments of the present application and simplifying the description, rather than indicating or implying that the device or element referred to must have a specific orientation, or be constructed and operated in a specific orientation, and therefore cannot be understood as a limitation on the embodiments of the present application.

In the description of the embodiments of the present application, unless otherwise clearly specified and limited, technical terms such as "provide", "install", "link", "connect" and "fix" should be understood in a broad sense, for example, it may be a fixed connection, or a detachable connection, or an integral connection; it may be a mechanical connection, or an electrical connection, or a signal connection; it may be a direct connection, or an indirect connection through an intermediary, or it may be an internal communication between two elements or an interaction relationship between two elements. Those of ordinary skill in the art may understand the specific meanings of the above terms in the embodiments of the present application according to specific situations.

In the embodiments of the present application, the same reference numerals represent the same components, and for the sake of brevity, in different embodiments, detailed descriptions of the same components are omitted. It should be understood that the thickness, length, width and other dimensions of the various components in the embodiments of the present application shown in the drawings, as well as the overall thickness, length, width and other dimensions of the integrated device, are for illustrative purposes only, and should not constitute any limitation to the present application.

The electrode plate mentioned in the present application is an important component of a battery cell, the battery cell including an electrode assembly and the electrode assembly being composed of a positive electrode plate, a negative electrode plate and a separator. The battery cell works mainly by moving metal ions between the positive electrode plate and negative electrode plate. The electrode plate includes a current collector (that is, the substrate as mentioned below) and an active material layer. Specifically, the positive electrode plate includes a positive current collector and a positive electrode active material layer. The positive electrode active material layer is coated on the surface of the positive current collector, the positive current collector not coated with the positive electrode active material layer protrudes from the positive current collector coated with the positive electrode active material layer, and the positive current collector not coated with the positive electrode active material layer is used as the positive electrode tab. Taking a lithium-ion battery cell as an example, the material of the positive current collector may be aluminum, and the positive electrode active material may be lithium cobaltate, lithium iron phosphate, ternary lithium, or lithium manganate, etc. The negative electrode plate includes a negative current collector and a negative electrode active material layer. The negative electrode active material layer is coated on the surface of the negative current collector, the negative current collector not coated with the negative electrode active material layer protrudes from the negative current collector coated with the negative electrode active material layer, and the negative current collector not coated with the negative electrode active material layer is used as the negative electrode tab. The material of the negative current collector may be copper, and the negative electrode active material may be carbon or silicon, etc. In order to ensure that a large current passes without fusing, positive electrode tabs are in number of multiple and are stacked together, and negative electrode tabs are in number of multiple and are stacked together.

The film mentioned in the present application refers to a belt-shaped active material layer film formed after the active material mixture is extruded and shaped, and the active material layer film is attached to the current collector to form an electrode plate.

In the present application, the battery cell suitable for the prepared electrode plate may include lithium ion secondary battery, lithium ion primary battery, lithium sulfur battery, sodium lithium ion battery, sodium ion battery or magnesium ion battery, etc., which is not limited in the embodiments of the present application.

The development of battery production technology needs to be improved in many aspects, such as energy density, production efficiency, production quality, and so on.

The traditional electrode plate preparation adopts the wet coating process, which mainly includes preparing a slurry from the binder, active material, and conductive agent, then wet coating the slurry on the surface of the current collector, and making the current collector enter a high-temperature oven to evaporate the solvent to obtain the required electrode plate. There are many disadvantages in the preparation of the electrode plate by the wet coating process: (1) the solid content of the slurry is low, and the amount of solvent used is large, resulting in disadvantages of high drying energy consumption and equipment investment, and the solvent has the disadvantages of toxicity and environmental friendliness; (2) the binder floats up during the drying of the electrode plate, resulting in non-uniform distribution of compositions in the active material layer, which seriously restricts the performance of the battery; and (3) due to problems such as easy cracking, the preparation requirements of the electrode plate with a thicker active material layer may not be met, and there is little room for improving the energy density of the battery.

In order to avoid the defects of using the wet coating process to prepare the electrode plate, for some existing batteries, a dry method process is adopted to prepare the electrode plate. The dry method process mainly comprises mixing the electrode active material, conductive agent, and dry-method binder evenly without adding a large amount of solvent, preparing the electrode plate film in a self-supporting structure by fiberizing the dry-method binder to form a net structure to bundle and fix the electrode active material and conductive agent in the binder fiber grid, and combining the electrode plate film and the current collector to prepare the battery electrode plate. Compared with the traditional method of preparing the electrode plate by wet coating, the present process can effectively reduce drying energy consumption and cycle, and reduce environmental pollution to a theoretical extent, and can easily realize the manufacturing of the thick electrode plate, reducing the risk of electrode plate cracking; and at the same time, can avoid the floating of the binder and improve the uniformity of the composition distribution of the active material layer. Overall, it may effectively improve the production efficiency and production quality of the electrode plate, and is conducive to improving the energy density of the battery.

However, the inventors found that the active material layer film prepared by the dry method process still has the problems of poor extrusion uniformity, poor continuity and easy breakage of the film.

The inventors of the present application analyzed the reasons and found that the structure of the active material mixture obtained after mixing the active material, conductive agent, solvent and binder is relatively loose, thus in the process of extruding the active material mixture to form a film, it is easy to cause problems such as poor structural uniformity and easy breakage of the extruded film due to insufficient continuous balance of extrusion power and poor flow uniformity of the extruded material, which seriously restricts the production quality of the electrode plate.

Based on the above reasons, in order to solve the problems of poor structural uniformity and easy breakage of the extruded film, the inventors of the present application provided a film preparation apparatus after in-depth researches. The film preparation apparatus includes a single-screw machine and an extrusion die connected to the discharge end of the single-screw machine. The single-screw machine is used for conveying and extruding the active material mixture, to continuously and uniformly convey the active material mixture to the extrusion die, and simultaneously provide continuous and balanced extrusion power to the active material mixture. The extrusion die shapes and extrudes the active material mixture to obtain the active material film with uniform structure distribution and strong continuity.

In the above, the compression section of the screw in the single-screw machine has a strong and effective pressure building effect on the active material mixture, making the active material mixture able to be more compact and have better interface fusion, effectively improving the elasticity, extensibility and plasticity of the active material mixture, and thereby reducing the risk of non-uniform structure distribution, poor continuity, and easy breakage of the extruded film.

Moreover, based on the characteristic that the active material mixture is relatively hard and has an easily-loosen structure, If the length of the compression section is too short, pressure building cannot be sufficiently performed on the active material mixture, resulting in that the compactness and structural plasticity of the active material mixture cannot be effectively improved. If the length of the compression section is too long, it may result in that the length of the homogenization section of the screw is too short, thus the uniformity of the conveying to the extrusion die cannot be guaranteed, which in turn affects the structural uniformity of the extruded film. In the technical solution of the present application, the length of the compression section of the screw is designed to be 45% to 65% of the overall length of the screw, which can effectively ensure the structural compactness of the active material mixture, and simultaneously effectively ensure the continuous uniformity of the feeding of the single-screw machine to the extrusion die, thereby effectively ensuring the structural uniformity and structural continuity of the extruded film, so that the production quality of the battery may be effectively improved.

The film preparation apparatus 100 disclosed in the embodiments of the present application may be used for, but not limited to, the preparation of the electrode plate, and may also be used for the preparation of various plastic films or the preparation process of extruded strip materials in other fields.

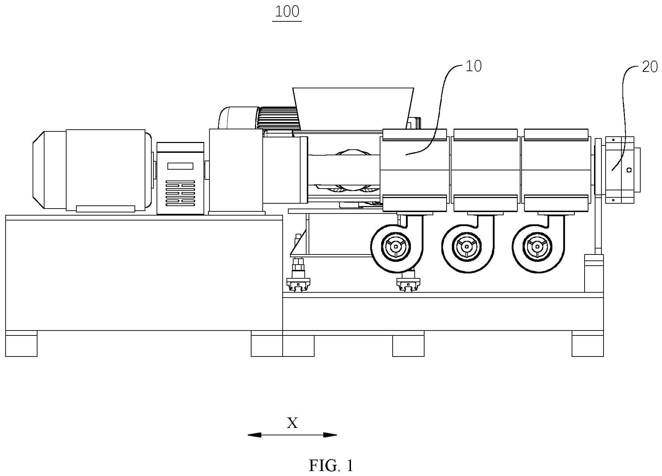

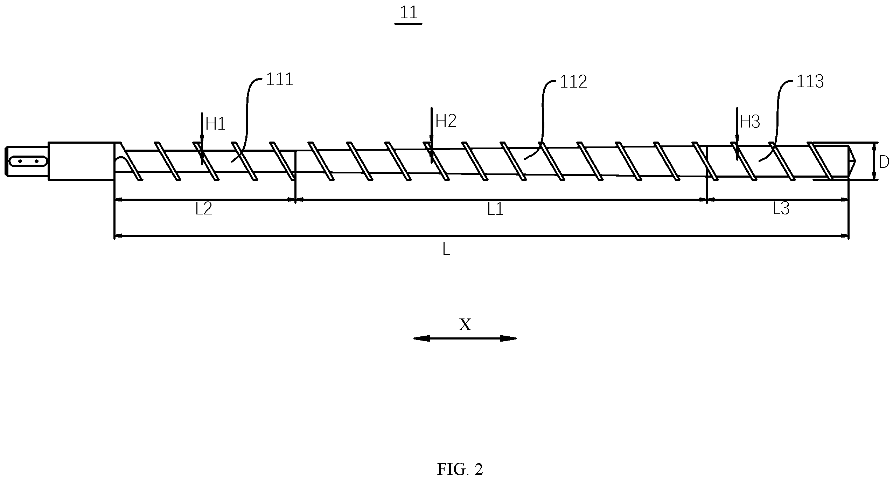

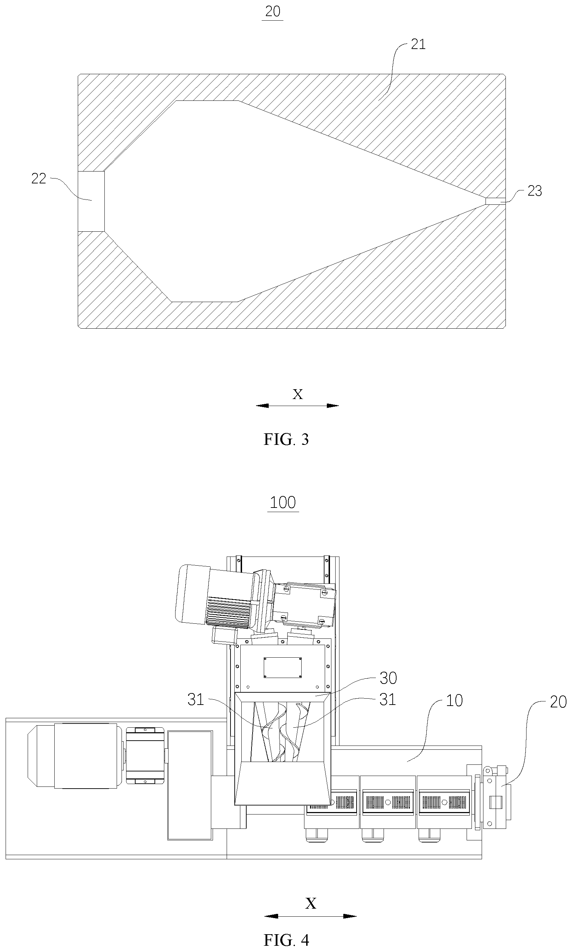

Referring to FIG. 1 to FIG. 3, FIG. 1 is a structural front view of the film preparation apparatus 100 provided by some embodiments of the present application; FIG. 2 is the front view of the screw 11 structure of the single-screw machine 10 provided by some embodiments of the present application; and FIG. 3 is the front view of the extrusion die 20 provided by some embodiments of the present application. The film preparation apparatus 100 provided in some embodiments of the present application includes a single-screw machine 10 and an extrusion die 20, wherein the single-screw machine 10 is configured for conveying and extruding an active material mixture, the extrusion die 20 is connected with a discharge end of the single-screw machine 10 and configured for extruding out an active material film 500, wherein a screw 11 of the single-screw machine 10 includes a compression section 112, wherein an axial length of the compression section 112 is L1, an axial length of the screw 11 is L, and $0.45 \leq L1/L \leq 0.65$.

The single-screw machine 10 is also called a single-screw extruder, and the single-screw extruder mainly includes an extrusion system and a transmission system. The extrusion system mainly includes a screw 11 and a barrel, and the material moves in the barrel through the rotation of the screw 11. The transmission system functions mainly to drive the screw 11 to rotate and supply the torque and rotational moment required by the screw 11 during the extrusion process. The transmission system is usually composed of a motor, a speed reducer and a bearing, etc.

The screw 11 of a conventional single-screw machine 10 may be a basic screw mechanism, and the screw 11 may include a conveying section 111 (also called a feeding section), a compression section 112 and a homogenization section 113 (also called a metering section) arranged in sequence in the conveying direction of the screw 11. In the above, the compression section 112 functions to compact the active material mixture and build up the extrusion pressure.

Since the single-screw machine 10 is a mature technology, the detailed structure and composition of the single-screw machine 10 will not be repeated in this embodiment.

As mentioned above, the active material mixture is used to form the active material layer of the electrode plate, and the active material mixture may be a mixture containing the electrode active material, conductive agent, solvent, binder and the like. It can be understood that the active material mixture may be a lumpy or flocculent structure with a certain degree of viscosity, plasticity and ductility.

The extrusion die 20 is used to shape the extruded active material mixture (adjust the extrusion shape of the active material mixture), so that the active material mixture is extruded to form a strip-shaped film structure in a three-dimensional structure.

In this embodiment, the structure type of the extrusion die 20 is not particularly limited. The extrusion die 20 can adopt a conventional plunger structure, a hanger structure, or a fishtail structure, as long as the material is uniformly extruded out to meet the dimension requirement of the film. Exemplarily, as shown in FIG. 3, the extrusion die 20 may include a die body 21 installed at the discharge end of the single-screw machine 10, wherein die body 21 is provided with a feeding port 22 and a lip 23 that communicates with feeding port 22, the feeding port 22 communicates with the discharge end of the single-screw 11 extruder, the cross-sectional shape of the lip 23 is corresponding to the cross-sectional shape of the extruded film, and the active material mixture enters the die body 21 through the feeding port 22, and is extruded out through the lip 23 to obtain the film. The thickness of the lip 23 (corresponding to the thickness of the active material film) may be selected from 1 mm to 10 mm, 2 mm to 10 mm, 3 mm to 8 mm, 4 mm to 9 mm, 4 mm to 7 mm, 4 mm to 6 mm, etc. Exemplarily, the thickness of the lip 23 may be 5 mm.

As shown in FIG. 2, the axial direction of the screw 11 is in the first direction X, the length of the compression section 112 in the first direction X is L1, the total length of the screw 11 in the first direction X is L, and the ratio of L1 to L satisfies $0.45 \leq L1/L \leq 0.65$.

That is, L1/L may be any value greater than or equal to 0.45 and less than 0.65. For example, L1/L may be 0.45, 0.48, 0.55, 0.58, 0.65 and so on. In some embodiments, the ratio of L1 to L satisfies $0.5 \leq L1/L \leq 0.6$.

In some embodiments, the film preparation apparatus 100 continuously feeds the extrusion die 20 through the single-screw machine 10, provides extrusion power to the active material mixture, and the extrusion die 20 shapes the active material mixture, so that the active material mixture can be extruded and shaped into a three-dimensional active material film 500. In the above, the compression section 112 of the screw 11 in the single-screw machine 10 plays a role in building pressure on the active material mixture, making the active material mixture more compact and have better interface fusion, and effectively improving the elasticity, extensibility and plasticity of the active material mixture, thereby reducing the risk of non-uniform material distribution and poor structural strength of the extruded film.

Additionally, the active material mixture is relatively hard and has an easily-loosen structure. The pressure building of the screw 11 on the active material mixture is particularly important. If the length of the compression section 112 is too short (L1/L is less than 0.45), pressure building cannot be sufficiently performed on the active material mixture, resulting in that the compactness and structural plasticity of the active material mixture cannot be effectively improved. If the length of the compression section 112 is too long (L1/L is greater than 0.65), it may result in that the length of the material discharge section of the screw 11 is too short, thus the uniformity of the conveying to the extrusion die 20 cannot be guaranteed, which in turn affects the structural uniformity of the extruded film. In the technical solution of the present application, the length of the compression section 112 of the screw 11 is designed to be 45% to 65% of the overall length of the screw 11, which can effectively ensure the structural compactness of the active material mixture, and simultaneously effectively ensure the continuous uniformity of the feeding of the single-screw machine 10 to the extrusion die 20, thereby effectively ensuring the structural uniformity and structural continuity of the extruded film, so that the production quality of the battery may be effectively improved.

According to some embodiments of the present application, $0.54 \leq L1/L \leq 0.58$.

Specifically, as shown in FIG. 2, the ratio L1/L of the length L1 of the compression section 112 in the first direction X to the total length L of the screw 11 in the first direction X may be any value greater than or equal to 0.54 and less than 0.58. For example, L1/L may be 0.54, 0.55, 0.56, 0.57, 0.58, etc. Preferably, L1/L is equal to 0.55.

The length of the compression section 112 of the screw 11 is designed to be 54% to 58% of the overall length of the screw 11, which can effectively ensure the structural compactness of the active material mixture, and simultaneously effectively ensure the continuous uniformity of the feeding of the single-screw machine 10 to the extrusion die 20.

According to some embodiments of the present application, the compression ratio of the screw is ε, $2 \leq \varepsilon \leq 2.1$, and preferably, $2.05 \leq \varepsilon \leq 2.08$.

As previously mentioned, the screw 11 may include a conveying section 111, a compression section 112 and a homogenization section 113 arranged in sequence in its conveying direction, wherein the compression ratio of the screw 11 is the ratio of the volume of the first thread groove of the conveying section 111 of the screw 11 to the volume of the last thread groove of the homogenization section 113 of the screw 11. Under the condition that the pitches of the conveying section 111, the compression section 112 and the homogenization section 113 of the screw 11 are the same, the formula for calculating the compression ratio of the screw 11 is:

$$\varepsilon = \frac{(D-H1)H1}{(D-H3)H3}$$

In the above, as shown in FIG. 2, D indicates the outer diameter of the screw 11, H1 indicates the thread groove depth of the first thread groove of the conveying section 111 (if the thread groove depth of the conveying section 111 is a constant value, H1 is the thread groove depth of the conveying section 111), H3 indicates the thread groove depth of the last thread groove of the homogenization section 113 (if the thread groove depth of the homogenization section 113 is a constant value, H3 indicates the thread groove depth of the homogenization section 113).

In the embodiment, the compression ratio ε of the screw 11 may be any value greater than or equal to 2 and less than or equal to 2.1. For example, the compression ratio ε of the screw 11 may be 2, 2.01, 2.02, 2.03, 2.04, 2.05, 2.06, 2.07, 2.08, 2.09, 2.0, 2.1, etc.

Preferably, the compression ratio ε of the screw 11 may be any value greater than or equal to 2.05 and less than or equal to 2.08. For example, the compression ratio ε of the screw 11 may be 2.05, 2.055, 2.06, etc. Exemplarily, the compression ratio ε of the screw 11 is 2.07.

The compression ratio of the screw 11 is related to the change in the thread groove depth of the compression section 112 of the screw 11. The larger the compression ratio of the screw 11 is, the more sufficient the pressure building on the active material mixture is, and the stronger the structural compactness and composition uniformity of the active material mixture is, which may effectively reduce the risk of non-uniform structure, low structural strength and easy breakage of the extruded film. However, if the compression ratio of the screw 11 is too large, the strength of the screw 11 may be reduced, which may easily result in that the screw 11 is sheared off under a relatively large torque, thus limiting the rotational speed and processing capacity of the screw 11. The compression ratio of the screw 11 of the present application is designed between 2 and 2.1, which can effectively improve the pressure building effect of the single-screw machine 10 on the active material mixture, and simultaneously ensure the processing capacity and extrusion capacity of the single-screw machine effectively.

According to some embodiments of the present application, $450mm \leq L1 \leq 500mm$.

As shown in FIG 2, the length L1 of the compression section in the first direction X may be any value greater than or equal to 450mm and less than or equal to 500mm. For example, L1 may be 450mm, 455mm, 460mm, 470mm, 480mm, 490mm, 500mm, etc. Exemplarily, L1 is 550mm.

The length of the compression section 112 is 450 mm to 500 mm, which can give full play to the pressure building effect on the active material mixture, ensure the structural compactness and composition uniformity of the active material mixture, and simultaneously avoid the problem that the screw 11 is too long to affect its own structural strength and cause its own too large weight, thereby effectively reducing the risk of difficulty in manufacturing and installing the single-screw machine 10.

According to some embodiments of the present application, as shown in FIG. 2, the screw 11 further includes a conveying section 111 and a homogenization section 113. The conveying section 111, the compression section 112 and the homogenization section 113 are arranged in sequence in the conveying direction of the screw 11. The thread groove depth of the conveying section 111 is greater than the thread groove depth of the homogenization section 113, and the thread groove depth of the compression section 112 gradually decreases from the conveying section 111 to the homogenization section 113.

The conveying section 111 is used to convey the active material mixture from the feeding end of the single-screw machine 10 to the compression section 112, and the homogenization section 113 conveys the compacted active material mixture to the extrusion die 20 at a uniform speed and under a uniform amount.

The thread groove depth of the conveying section 111 is greater than the thread groove depth of the homogenization section 113, effectively ensuring the material processing capacity and processing efficiency of the conveying section 111. The thread groove depth of the compression section 112 gradually decreases, the volume of the thread groove thereof gradually decreases, and the processing capacity of the active material mixture gradually decreases, so that pressure is gradually built up on the active material mixture, increasing the structural compactness of the active material mixture. The thread groove depth of the homogenization section 113 is the smallest, to convey the compacted active material mixture to the extrusion die 20 at a uniform speed and under a uniform amount.

According to some embodiments of the present application, the thread groove depth of the compression section 112 is H2, 3mm≤H2≤10mm, and preferably, 4mm≤H2≤ 9.8mm.

As mentioned above, the thread groove depth of the compression section 112 gradually decreases from the conveying section 111 to the homogenization section 113, and the thread groove depth H2 of the compression section 112 is a variable value. 3mm≤H2≤10mm means that H2 may gradually decrease from any value greater than or equal to 3mm and less than or equal to 10mm to any value greater than or equal to 3mm. Preferably, H2 may gradually decrease from any value greater than or equal to 4mm and less than or equal to 9.8mm to any value greater than or equal to 4mm. Exemplarily, the maximum value of H2 may be 9.6mm, and the minimum value of H2 may be 4mm, that is, H2 gradually decreases from 9.6mm to 4mm.

The thread groove depth of the compression section gradually decreases within the range of greater than or equal to 3 mm and less than or equal to 10 mm in the conveying direction of the screw 11. This design avoids, while ensuring the compression ratio of the screw 11, the thread groove depth of the conveying section 111 from being too large to affect the structural strength of the screw 11, and prevents the thread groove depth of the homogenization section 113 from being too small to affect the conveying efficiency of the active material mixture.

According to some embodiments of the present application, the axial length of the conveying section 111 is L2, 0.12≤L2/L≤0.4, and preferably, 0.15≤L2/L≤0.35.

As shown in FIG. 2, the axial direction of the screw 11 is in the first direction X, the length of the conveying section 111 in the first direction X is L2, L is the total length of the screw 11 in the first direction, and the ratio L2/L may be any value greater than or equal to 0.12 and less than or equal to 0.4. For example, L2/L may be 0.12, 0.13, 0.14, 0.2, 0.3, 0.4, etc.

Preferably, the ratio L2/L may be any value greater than or equal to 0.15 and less than or equal to 0.35. For example, L2/L may be 0.15, 0.16, 0.17, 0.2, 0.23, 0.25, 0.35, etc.

Exemplarily, the ratio L2/L is 0.25.

In the above technical solution, the length of the conveying section 111 accounts for 12% to 40% of the total length of the screw 11, which can effectively ensure the conveying capacity and conveying efficiency of the conveying section 111 for the active material mixture.

According to some embodiments of the present application, the axial length of the conveying section 111 is L2, 200mm≤L2≤240mm, and preferably, 215mm≤L2≤222mm.

The length L2 of the conveying section in the first direction X may be any value greater than or equal to 200mm and less than or equal to 240mm. For example, L2 may be 200mm, 230mm, 240mm, etc.

Preferably, the length L2 of the conveying section 111 in the first direction X may be may be any value greater than or equal to 215mm and less than or equal to 222mm. For example, L2 may be 215mm, 216mm, 217mm, 220mm, 222mm, etc.

Exemplarily, L2 is 220mm.

In the above technical solution, the axial length of the conveying section 111 is 200mm to 240mm, which can meet the requirements for the conveying efficiency of the active material mixture and reduce the risk of accumulation and blockage of the active material mixture at the feeding end of the single-screw machine 10.

According to some embodiments of the present application, the thread groove depth of the conveying section 111 is H1, and the outer diameter of the screw 11 is D, which satisfy: H1 > 0.1D, and preferably, H1 > 0.2D.

As shown in FIG. 2, the thread groove depth H1 of the conveying section 111 is a constant value, and the outer diameter D of the screw 11 is also a constant value. H1 may be equal to a value greater than 0.1D, such as 0.11D, 0.12D, 0.2D, and 0.3D. Preferably, H1 may be equal to a value greater than 0.2D, such as 0.21D, 0.22D, and 0.23D. Exemplarily, H1=0.21D.

In the above technical solution, the thread groove depth of the conveying section 111 is greater than 10% of the outer diameter of the screw 11, which can effectively ensure the volume of the thread groove of the conveying section 111, thereby effectively ensuring the conveying efficiency of the conveying section 111 for the active material mixture.

According to some embodiments of the present application, the thread groove depth of the conveying section 111 is H1, 9mm≤H1≤10mm, and preferably, 9.5mm≤H1≤9.8mm.

The thread groove depth of the conveying section is H1, which is a constant value, and H1 may be any value greater than or equal to 9mm and less than or equal to 10mm. For example, H2 may be 9mm, 9.1mm, 9.2mm, 9.3mm, 9.4mm, 9.5mm, 9.8mm, 10mm, etc.

Preferably, H1 may be any value greater than or equal to 9.5mm and less than or equal to 9.8mm. For example, H1 may be 9.5mm, 9.6mm, 9.7mm, 9.75mm, 9.8mm, etc.

Exemplarily, H1 is 9.6mm.

In the above technical solution, the thread groove depth of the conveying section 111 is 9mm to 10mm, effectively ensuring the conveying efficiency of the conveying section 111.

According to some embodiments of the present application, the axial length of the homogenization section 113 is L3, 0.10≤L3/L≤0.30, and preferably, 0.15≤L3/L≤0.25.

As shown in FIG. 2, the axial direction of the screw 11 is in the first direction X, the length of the homogenization section 113 in the first direction X is L3, L is the total length of the screw 11 in the first direction, and the ratio L3/L may be any value greater than or equal to 0.10 and less than or equal to 0.30. For example, L3/L may be 0.10, 0.12, 0.13, 0.14, 0.2, 0.3, etc.

Preferably, the ratio L3/L may be any value greater than or equal to 0.15 and less than or equal to 0.25. For example, L3/L may be 0.15, 0.16, 0.17, 0.18, 0.2, 0.23, 0.25, etc.

Exemplarily, the ratio L3/ L is 0.20.

In the above technical solution, the axial length of the homogenization section 113 accounts for 10% to 30% of the total length of the screw 11, which can effectively ensure the uniformity and continuity of the conveying of the compacted active material mixture by the homogenization section 113.

According to some embodiments of the present application, the axial length of the homogenization section 113 is L3, 150mm≤L3≤200mm, and preferably, 175mm≤L3≤185mm.

The length L3 of the homogenization section in the first direction X may be any value greater than or equal to 150mm and less than or equal to 200mm. For example, L3 may be 150mm, 160mm, 170mm, 200mm, etc.

Preferably, the length L3 of the homogenization section 113 in the first direction X may be any value greater than or equal to 175mm and less than or equal to 185mm. For example, L3 may be 175mm, 176mm, 177mm, 180mm, 185mm, etc.

Exemplarily, L3 is 180mm.

In the above technical solution, the axial length of the homogenization section 113 is 150 mm to 200 mm, which can satisfy the production requirements for continuous, quantitative and uniform extrusion of the active material, and effectively ensure the extrusion effect of the single-screw machine 10.

According to some embodiments of the present application, the thread groove depth of the homogenization section 113 is H3, the outer diameter of the screw 11 is D, 0.02D≤H3≤0.15D, and preferably, 0.08D≤H3≤0.1D.

As shown in FIG. 2, the thread groove depth H3 of the homogenization section is a constant value, and the outer diameter D of the screw 11 is also a constant value. The thread groove depth H3 of the homogenization section 113 may be any value greater than or equal to 0.02D and less than or equal to 0.15D. For example, H3 may be equal to 0.02D, 0.03D, 0.04D, 0.05D, 0.08D, 0.09D, 0.1D, 0.15D, etc.

Preferably, H3 may be any value greater than or equal to 0.08D and less than or equal to 0.1D. For example, H3 may be 0.08D, 0.085D, 0.09D, 0.95D, etc.

Exemplarily, H3 is 0.09D.

In the above technical solution, the thread groove depth of the homogenization section 113 accounts for 2% to 15% of the outer diameter of the screw 11, which can avoid excessive changes in the compactness of the active material mixture due to too large volume of the thread groove of the homogenization section 113, while effectively ensuring the conveying efficiency of the homogenization section 113, and avoid affecting the extrusion uniformity and continuity of the film.

According to some embodiments of the present application, the thread groove depth of the homogenization section 113 is H3, 3mm≤H3≤5mm, and preferably, 3.8mm≤H3≤4.2mm.

The thread groove depth H3 of the homogenization section is a constant value, and H3 may be any value greater than or equal to 3mm and less than or equal to 5mm. For example, H3 may be 3mm, 3.1mm, 3.2mm, 3.5mm, 4mm, 4.5mm, 5mm, etc.

Preferably, H3 may be any value greater than or equal to 3.8mm and less than or equal to 4.2mm. For example, H3 may be 3.8mm, 3.9mm, 4mm, 4.1mm, 4.15mm, 4.2mm, etc.

Exemplarily, H3 is 4mm.

In the above technical solution, the thread groove depth of the homogenization section 113 is 3mm to 5mm, effectively ensuring the conveying effect of the homogenization section 113 for the active material mixture.

According to some embodiments of the present application, the outer diameter of the screw 11 is D, satisfying: 15≤L/D≤40, and preferably, 18≤L/D≤25.

As shown in FIG. 2, L is the axial length of the screw, and L/D is the length-to-diameter ratio of the screw 11. The length-to-diameter ratio L/D of the screw 11 may be any value greater than or equal to 15 and less than or equal to 40. For example, L/D may be 15, 16, 18, 20, 21, 25, 30, 35, 40, etc.

Preferably, the length-to-diameter ratio of the screw 11 may be any value greater than or equal to 18 and less than or equal to 25. For example, L/D may be 18, 19, 20.5, 22, 23, 24, 25, etc.

Exemplarily, the length-to-diameter ratio L/D of the screw 11 is 20.

In the above technical solution, the length-to-diameter ratio of the screw 11 is 15 to 40. If the length-to-diameter ratio of the screw 11 is less than 15, the extrusion capacity and pressure building capacity of the single-screw machine 10 may be affected, thereby affecting the quality of extruding the active material mixture to form a film; while if the length-to-diameter ratio of the screw 11 is greater than 40, the structural strength of the screw 11 may be affected, limiting the rotational speed and processing capacity of the screw 11, and the difficulty in manufacturing and installation may be increased because of the too long screw 11. The length-to-diameter ratio of the screw 11 is set between 15 and 40, which can effectively ensure the production quality of extruding the active material mixture to form the film, and simultaneously reduce difficulty in manufacturing, installing, and driving of the single-screw machine 10, and effectively save material cost.

According to some embodiments of the present application, the outer diameter of the screw 11 is D, 40mm≤D≤48mm, and preferably, 44mm≤D≤46mm.

The outer diameter D of the screw 11 is a constant value, and D may be any value greater than or equal to 40mm and less than or equal to 48mm. For example, D may be 40mm, 41mm, 42mm, 43mm, 47mm, 48mm, etc.

Preferably, D may be any value greater than or equal to 44mm and less than or equal to 46mm. For example, D may be 44mm, 45mm, 45.5mm, 46mm, etc.

Exemplarily, D is 45mm.

In the above technical solution, the outer diameter of the screw 11 is set to 40mm to 48mm, which can reduce the material cost of the single-screw machine 10 while satisfying the production quality of extruding the active material mixture to form the film.

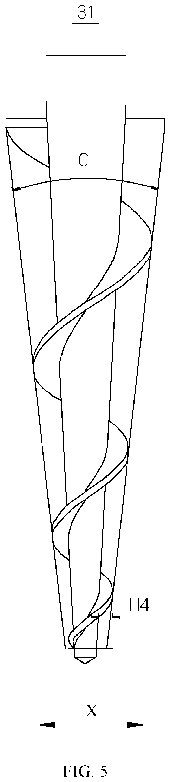

Continuing to refer to FIGS. 1-3 and further referring to FIG. 4 and FIG. 5, FIG. 4 is a structural top view of a film preparation apparatus 100 provided in some embodiments of the present application; and FIG. 5 is a front view of a conical screw 31 of a conical double-forced feeding machine 30 provided in some embodiments of the present application. According to some embodiments of the present application, the film preparation apparatus 100 further includes: a conical double-forced feeding machine 30, which communicates with the feeding end of the single-screw machine 10 and is used to feed the single-screw machine 10. The conical screw 31 of the conical double-forced feeding machine 30 has a taper C, 10°≤C≤30°, and preferably, 10°≤C≤20°.

The conical double-forced feeding machine is a conventional forced feeding device, and the embodiments of the present application do not repeat the working principle and basic structure of the conical double-forced feeding machine 30. The conical double-forced feeding machine 30 includes two conical screws 31 arranged in parallel, and the materials are conveyed through the rotation of the two conical screws 31.

The conical double-forced feeding machine 30 communicates with the feeding end of the single-screw machine 10, which means that the discharge end of the conical double-forced feeding machine 30 communicates with the feeding end of the single-screw machine 10, and the active material mixture is uniformly and forcibly added to the single-screw machine 10 through the conical double-forced feeding machine 30.

The taper C of the conical screw 11 may be any value greater than or equal to 10° and less than or equal to 30°. For example, C may be 10°, 12°, 13°, 15°, 20°, 25°, 30°, etc.

Preferably, the taper C of the conical screw 31 may be any value greater than or equal to 10° and less than or equal to 20°. For example, C may be 10°, 11°, 12°, 13°, 14°, 15°, 16°17°, 18°, 19°, 20°, etc.

Exemplarily, the taper C of the conical screw 31 is 15°.

In the above technical solution, the feeding end of the single-screw machine 10 is connected with a conical double-forced feeding machine 30, and the conical double-forced feeding machine 30 can uniformly, continuously and forcefully feed the lumpy active material mixture in a rib net structure to the single-screw machine 10, thereby effectively ensuring the conveying continuity of the active material mixture by the single-screw machine 10. If the taper of the conical screw 31 is too small, the feeding speed of the conical screw 31 is too slow and the forced feeding of the lumpy material cannot be realized, so that the uniform and continuous feeding of the active material mixture cannot be guaranteed; while if the taper of the conical screw 31 is too large, the thread groove depth of the conical screw 31 is large, and the material intake thereof is too large, which may easily cause most of the material to be repeatedly cyclically sheared in the conical double-forced feeding machine 30, not only easily resulting in excessive shearing of the material, but also causing that most of the material cannot be effectively conveyed to the single screw 11 to be taken away in time, affecting the conveying continuity of single screw. In addition, if the taper is too large, it is easy to cause the material to bridge in the conical double-forced feeding mechanism and not able to enter the screw groove of the conical screw 31, so the forced feeding function cannot be realized. The taper of the conical screw 31 of the conical double-forced feeding machine 30 of the present application is set between 105° and 30°, which can effectively ensure the uniformity and continuity of feeding the active material mixture, and reduce the risk of over-shearing of the material, thereby improving the production quality of film extrusion.

According to some embodiments of the present application, referring to FIG. 2 and FIG. 5, the screw 11 further includes a conveying section 111, the conveying section 111 is located upstream of the compression section 112, the tail end of the conical screw 31 is docked with the conveying section 111, and the thread groove depth at the tail end of the conical screw 31 is H4, the thread groove depth of the conveying section 111 is H1, and H4>H1.

As mentioned above, the conveying section 111 is used to convey the active material mixture from the feeding end of the single-screw machine 10 to the compression section 112, and the conveying section 111 is arranged at the feeding end of the single-screw machine 10 and located upstream of the compression section 112.

In the above technical solution, the tail end of the conical screw 31 is docked with the conveying section 111 of the single-screw machine 10 to forcedly feed the active material mixture into the conveying section 111 of the single-screw machine 10. The thread groove depth at the tail end of the conical screw 31 is greater than the thread groove depth of the conveying section 111, ensuring that the extrusion amount of the conical double-forced feeding machine 30 is greater than the material intake of the single-screw machine 10, so as to ensure that the screw 11 has sufficient material intake with no pores, and further improves the continuous uniformity of feeding of the active material mixture.

According to some embodiments of the present application, 0.75H4≤H1≤0.9H4, and preferably, 0.77H4≤H1≤0.8H4.

The thread groove depth of the conveying section is H1, which is a fixed value, and H1 may be any value greater than or equal to 0.75H4 and less than or equal to 0.9H4, that is, the ratio H1/H4 may be any value greater than or equal to 0.75 and less than or equal to 0.9. For example, H1/H4 may be 0.75, 0.8, 0.85, 0.9, etc.

Preferably, H1 may be any value greater than or equal to 0.77H4 and less than or equal to 0.8H4, that is, the ratio H1/H4 may be any value greater than or equal to 0.77 and less than or equal to 0.8. For example, H1/H4 may be 0.77, 0.78, 0.79, 0.8, etc.

Exemplarily, H1=0.78H4.

If the difference between the thread groove depth of the conveying section 111 and the thread groove depth at the tail end of the conical screw 31 is too large, it also results in that most of the material cannot be taken away by the single-screw machine 10 in time, and the material is likely to be blocked at the feeding end of the single-screw machine 10; and the material is repeatedly cyclically sheared in the conical double-forced feeding mechanism 30, which may easily lead to excessive shearing of the material to destroy the strength and extensibility of the material itself, and thus cannot meet the requirements of the strength and extensibility of the material in the subsequent processes. The thread groove depth of the conveying section 111 is 75% to 90% of the thread groove depth at the tail end of the conical screw 31, which can effectively reduce the risk of blocking and over-shearing of the material, thereby ensuring the conveying continuity and the structural stability of the active material mixture, thereby improving the production quality of film extrusion.

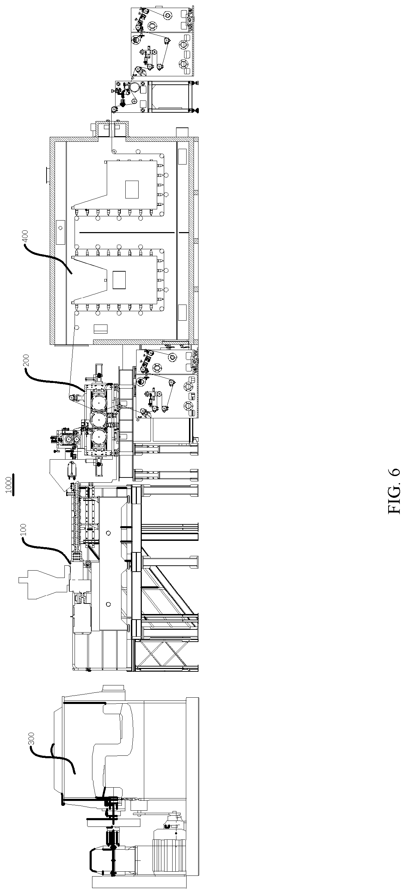

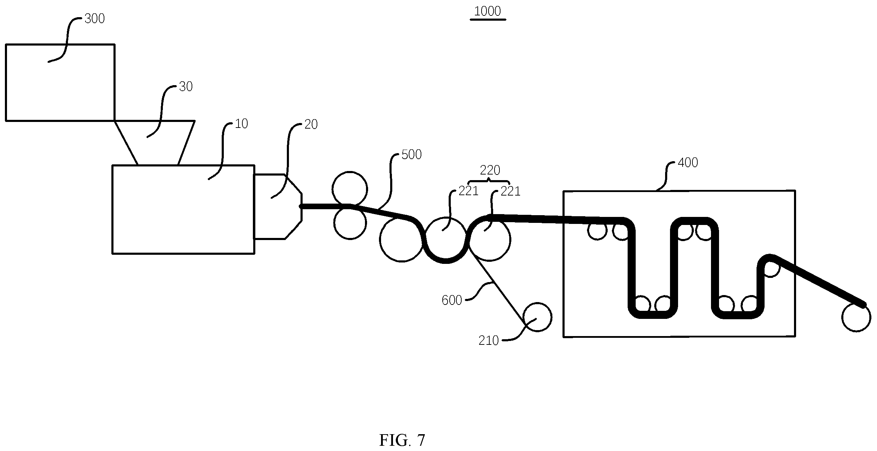

Continuing to refer to FIGS. 1-5 and further referring to FIG. 6 and FIG. 7, FIG. 6 is a schematic view of an overall structure of an electrode plate manufacturing device 1000 provided in some embodiments of the present application, and FIG. 7 is a schematic view of a simple structure of an electrode plate manufacturing device 1000 provided in some embodiments of the present application. Embodiments of the present application provides an electrode plate manufacturing device 1000. The electrode plate manufacturing device 1000 includes: a kneading apparatus 300 for stirring and kneading the active material mixture; the film preparation apparatus 100 as described in any of the above solutions, which is arranged downstream of the kneading apparatus 300, wherein the film preparation apparatus 100 is used to extrude the active material mixture to form an active material film 500; and a combination apparatus 200 provided downstream of the film preparation apparatus 100, wherein the combination apparatus 200 is used to combine a substrate 600 and the active material film 500 to form an electrode plate.

The kneading apparatus 300 may be in various implementation structures. In some embodiments, the kneading apparatus 300 may be a kneader, which is a special mixing and stirring device. The most common structure thereof comprises two stirring paddles arranged sided by side, tangent to each other and having speed difference, with one paddle having a fast speed and the other paddle having a slow speed, facilitating producing the shearing force. Different paddle speeds enable the kneaded active material mixture to be sheared quickly, so that the material can be mixed evenly and form a lumpy or flocculent rib net structure.

In other embodiments, the kneading apparatus 300 may also be an internal mixer.

The kneader and the internal mixer are both conventional production devices in the field of industrial production, and their structures and principles will not be described here. Exemplarily, the kneading apparatus 300 is a kneader.

The film preparation apparatus 100 is provided downstream of the kneading apparatus 300, and the active material mixture formed by kneading in the kneading apparatus 300 is discharged from the kneading apparatus 300 and sent into the film preparation apparatus 100, and the active material mixture is extruded by the film preparation apparatus 100 to form a film.

The combination apparatus 200, which is provided downstream of the film preparation apparatus 100, combines the substrate 600 and the film prepared by the film preparation apparatus 100 to form the electrode plate.

The combination apparatus 200 have multiple implementation forms. Exemplarily, the combination apparatus 200 may include a rolling mechanism 220 and an unwinding mechanism 210. The rolling mechanism 220 may include at least one pair of pressure rollers 221, and a combination gap is formed between the pair of pressure rollers 221. The unwinding mechanism 210 may be disposed under the rolling mechanism 220 and is responsible for unwinding the substrate 600. The substrate 600 and the film enter the combination gap, and the pressure rollers 221 roll and combine the substrate 600 and the film.

In some other embodiments, the electrode plate manufacturing device 1000 further includes a drying apparatus 400. The drying apparatus 400 is provided downstream of the combination apparatus 200 and is responsible for drying the electrode plate.

The kneading apparatus 300 of the electrode plate manufacturing device is used to fully mix and knead, in advance, various compositions for manufacturing the film into a lumpy active material mixture with certain viscosity and plasticity, and then send the lumpy active material mixture into the film preparation apparatus 100 to be extruded to form the active material film 500, and the combination apparatus 200 combines the active material film 500 with the substrate 600 to obtain an electrode plate. The overall electrode plate manufacturing device 1000 is highly integrated, and can effectively improve the production quality and production efficiency of the electrode plate, thereby effectively improving the production quality of the battery.

Referring to FIG. 1 to FIG. 5, the film preparation apparatus 100 provided in some embodiments of the present application includes a single-screw machine 10, an extrusion die 20 and a conical double-forced feeding machine 30, wherein the single-screw machine 10 is configured for conveying and extruding an active material mixture, the extrusion die 20 is connected with a discharge end of the single-screw machine 10 and configured for extruding out an active material film 500, and the conical double-forced feeding machine 30 is connected with the feeding end of the single-screw machine 10, and used to feed the single-screw machine 10.

In the above, the screw 11 of the single-screw machine 10 includes a conveying section 111, a compression section 112 and a homogenization section 113, and the conveying section 111, the compression section 112 and the homogenization section 113 are arranged in sequence in the conveying direction of the screw 11, and the thread groove depth of the conveying section 111 is greater than the thread groove depth of the homogenization section 113, and the thread groove depth of the compression section 112 gradually decreases from the conveying section 111 to the homogenization section 113.

The tail end of the conical screw 31 of the conical double-forced feeding machine 30 is docked with the conveying section 111 of the single-screw machine 10.

The axial length of the screw 11 is L, and the outer diameter of the screw 11 is D; the axial length of the conveying section 111 is L1, and the thread groove depth of the conveying section 111 is H1; the axial length of the compression section 112 is L2, and the thread groove depth of the compression section 112 is H2; the axial length of the homogenization section 113 is L3, and the thread groove depth of the homogenization section 113 is H3; the compression ratio of the screw 11 is $\varepsilon$; the taper C of the conical screw 31 of the conical double-forced feeding machine 30 is C, and the thread groove depth at the tail end of the conical screw 31 of the conical double-forced feeding machine 30 is H4

They satisfy: L1/L=0.25, L2/L=0.55, L3/L=0.2; H1=0.21D, H3=0.09D; L/D=20; $\varepsilon$=2.07; C=15°; H1=0.78H4.

It should be noted that, without conflict, the features in the embodiments in the present application may be combined with each other.

Although the present application has been described with reference to preferred embodiments, various modifications may be made and equivalents may be substituted for elements thereof without departing from the scope of the present application. In particular, as long as there is no structural conflict, the technical features mentioned in the various embodiments may be combined in any manner. The present application is not limited to the specific embodiments disclosed herein, but includes all technical solutions falling within the scope of the claims.

## Claims

1. A film preparation apparatus, comprising a single-screw machine and an extrusion die, wherein the single-screw machine is configured for conveying and extruding an active material mixture, and the extrusion die is connected with a discharge end of the single-screw machine and configured for extruding out an active material film,
wherein a screw of the single-screw machine comprises a compression section, an axial length of the compression section is L1, an axial length of the screw is L, and 0.45≤L.1/L≤0.65.

2. The film preparation apparatus according to claim 1, wherein 0.54≤L1/L≤0.58.

3. The film preparation apparatus according to claim 1 or 2, wherein a compression ratio of the screw is $\varepsilon$, 2≤$\varepsilon$≤2.1, and preferably, 2.05≤$\varepsilon$≤2.08.

4. The film preparation apparatus according to any one of claims 1 to 3, wherein 450mm≤L1≤500mm.

5. The film preparation apparatus according to any one of claims 1 to 4, wherein the screw further comprises a conveying section and a homogenization section, the conveying section, the compression section and the homogenization section are arranged in sequence in a conveying direction of the screw, a thread groove depth of the conveying section is greater than a thread groove depth of the homogenization section, and a thread groove depth of the compression section gradually decreases from the conveying section to the homogenization section.

6. The film preparation apparatus according to claim 5, wherein the thread groove depth of the compression section is H2, 3mm≤H2≤10mm, and preferably, 4mm≤H2≤ 9.8mm.

7. The film preparation apparatus according to claim 5 or 6, wherein an axial length of the conveying section is L2, 0.12≤L2/L≤0.4, and preferably, 0.15≤L2/L≤0.35.

8. The film preparation apparatus according to any one of claims 5 to 7, wherein an axial length of the conveying section is L2, 200mm≤L2≤240mm, and preferably, 215mm≤L2≤222mm.

9. The film preparation apparatus according to any one of claims 5 to 8, wherein the thread groove depth of the conveying section is H1, and an outer diameter of the screw is D, satisfying: H1 > 0.1D, and preferably, H1 > 0.2D.

10. The film preparation apparatus according to any one of claims 5 to 9, wherein the thread groove depth of the conveying section is H1, 9mm≤H1≤10mm, and preferably, 9.5mm≤H1≤9.8mm.

11. The film preparation apparatus according to any one of claims 5 to 10, wherein an axial length of the homogenization section is L3, 0.10≤L3/L≤0.30, and preferably, 0.15≤L3/L≤0.25.

12. The film preparation apparatus according to any one of claims 5 to 11, wherein an axial length of the homogenization section is L3, 150mm≤L3≤200mm, and preferably, 175mm≤L3≤185mm.

13. The film preparation apparatus according to any one of claims 5 to 12, wherein the thread groove depth of the homogenization section is H3, and an outer diameter of the screw is D, 0.02D≤H3≤0.15D, and preferably, 0.08D≤H3≤0.1D.

14. The film preparation apparatus according to any one of claims 5 to 13, wherein the thread groove depth of the homogenization section is H3, 3mm≤H3≤5mm, and preferably, 3.8mm≤H3≤4.2mm.

15. The film preparation apparatus according to any one of claims 1 to 14, wherein an outer diameter of the screw is D, satisfying: 15≤L/D≤40, and preferably, 18≤L/D≤25.

16. The film preparation apparatus according to any one of claims 1 to 15, wherein an outer diameter of the screw is D, 40mm≤D≤48mm, and preferably, 44mm≤D≤46mm.

17. The film preparation apparatus according to any one of claims 1 to 16, further comprising:
a conical double-forced feeding machine, which communicates with a feeding end of the single-screw machine and is configured to feed the single-screw machine, wherein a conical screw of the conical double-forced feeding machine has a taper C, 10°≤C≤30°, and preferably, 10°≤C≤20°.

18. The film preparation apparatus according to claim 17, wherein the screw further comprises a conveying section, the conveying section is located upstream of the compression section, a tail end of the conical screw is docked with the conveying section, a thread groove depth at the tail end of the conical screw is H4, a thread groove depth of the conveying section is H1, and H4>H1.

19. The film preparation apparatus according to claim 18, wherein 0.75H1≤H4≤0.9H1, and preferably, 0.77H4≤H1≤0.8H4.

20. An electrode plate manufacturing device, comprising:

a kneading apparatus, configured for stirring and kneading an active material mixture;
the film preparation apparatus according to any one of claims 1 to 19, provided downstream of the kneading apparatus, wherein the film preparation apparatus is configured for extruding the active material mixture to form an active material film; and

a combination apparatus, provided downstream of the film preparation apparatus, wherein the combination apparatus is configured for combining a substrate and the active material film to form an electrode plate.

100

10

20

X

FIG. 1

FIG. 2

20

21

22

23

X

FIG. 3

100

30
31
31
10
20

X

FIG. 4

31

C

H4

X

FIG. 5

FIG. 6

FIG. 7

## INTERNATIONAL SEARCH REPORT

International application No.

**PCT/CN2022/106724**

### A. CLASSIFICATION OF SUBJECT MATTER

H01M4/04(2006.01)i;B29C45/60(2006.01)i;B29C48/395(2019.01)i

According to International Patent Classification (IPC) or to both national classification and IPC

### B. FIELDS SEARCHED

Minimum documentation searched (classification system followed by classification symbols)

IPC: H01M, B29C

Documentation searched other than minimum documentation to the extent that such documents are included in the fields searched

Electronic data base consulted during the international search (name of data base and, where practicable, search terms used)

ENTXT, CNKI, CNTXT, DWPI, ENTXTC: 单螺杆, 单螺旋, 电极, 干法, 活性物质, 极片, 挤出, 长度, 建压, 三段, 深度, 疏松, 松散, 压实, 压缩, 压缩比, 锥度, 喂料机; single screw, electrode, dry process, active material, pole piece, extrusion, length, build press, tristage, depth, loose, compacted, compression, compression ratio, taper, feeder

### C. DOCUMENTS CONSIDERED TO BE RELEVANT

| Category* | Citation of document, with indication, where appropriate, of the relevant passages | Relevant to claim No. |
|---|---|---|
| Y | CN 112072063 A (HUIZHOU EVE ENERGY CO., LTD. et al.) 11 December 2020 (2020-12-11) description, paragraphs 12-140, and figure 1 | 1-20 |
| Y | CN 102066080 A (EASTMAN CHEMICAL COMPANY) 18 May 2011 (2011-05-18) description, paragraphs 11-178, and figure 1 | 1-20 |
| Y | WO 9519052 A1 (VALENCE TECHNOLOGY INC.) 13 July 1995 (1995-07-13) description, page 2, line 10-page 14, line 30, and figures 1-8 | 1-20 |
| A | JP 2010017947 A (SEKISUI CHEMICAL CO., LTD.) 28 January 2010 (2010-01-28) entire document | 1-20 |

☐ Further documents are listed in the continuation of Box C.   ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **27 March 2023** | **30 March 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

<div align="center">

**INTERNATIONAL SEARCH REPORT**
Information on patent family members

</div>

| International application No. |
| --- |
| **PCT/CN2022/106724** |

| Patent document cited in search report | | | Publication date (day/month/year) | Patent family member(s) | | | Publication date (day/month/year) |
| --- | --- | --- | --- | --- | --- | --- | --- |
| CN | 112072063 | A | 11 December 2020 | CN | 212625651 | U | 26 February 2021 |
| | | | | WO | 2022056983 | A1 | 24 March 2022 |
| CN | 102066080 | A | 18 May 2011 | MX | 2010013953 | A | 02 May 2011 |
| | | | | PL | 2300211 | T3 | 29 March 2013 |
| | | | | WO | 2009154698 | A1 | 23 December 2009 |
| | | | | US | 2009315219 | A1 | 24 December 2009 |
| | | | | US | 8057726 | B2 | 15 November 2011 |
| | | | | CA | 2726638 | A1 | 23 December 2009 |
| | | | | CA | 2726638 | C | 16 April 2013 |
| | | | | EP | 2300211 | A1 | 30 March 2011 |
| | | | | EP | 2300211 | B1 | 03 October 2012 |
| | | | | ES | 2392324 | T3 | 07 December 2012 |
| | | | | BRPI | 0915081 | A2 | 27 October 2015 |
| | | | | BRPI | 0915081 | B1 | 07 May 2019 |
| | | | | BRPI | 0915081 | B8 | 17 March 2020 |
| | | | | CN | 102066080 | B | 18 September 2013 |
| | | | | IN | 294309 | B | 14 March 2018 |
| WO | 9519052 | A1 | 13 July 1995 | AU | 1563595 | A | 01 August 1995 |
| JP | 2010017947 | A | 28 January 2010 | | None | | |

Form PCT/ISA/210 (patent family annex) (July 2022)